# EUROPÄISCHE PATENTSCHRIFT

(11) **EP 3 262 364 B1**
(45) Veröffentlichungstag und Bekanntmachung des Hinweises auf die Patenterteilung: **26.12.2018**
(21) Anmeldenummer: 16706332.0
(22) Anmeldetag: 18.02.2016
(51) Int. Cl.: F28D 21/00, F28G 1/08, F28G 3/10, F28G 1/16, F28G 3/16, F28F 19/00

(54) **VERFAHREN ZUR REINIGUNG EINER ZUR WÄRMEÜBERTRAGUNG VORGESEHENEN TRENNWAND IN EINER WÄRMERÜCKGEWINNUNGSEINHEIT FÜR ABWASSER, SOWIE WÄRMERÜCKGEWINNUNGSEINHEIT**
METHOD FOR CLEANING A PARTITION PROVIDED FOR TRANSMITTING HEAT IN A HEAT RECOVERY UNIT FOR WASTE WATER, AND HEAT RECOVERY UNIT
PROCÉDÉ DE NETTOYAGE D'UNE CLOISON DESTINÉE À UN TRANSFERT DE CHALEUR DANS UNE UNITÉ DE RÉCUPÉRATION DE CHALEUR POUR LES EAUX USÉES, ET UNITÉ DE RÉCUPÉRATION DE CHALEUR

(30) Priorität: 25.02.2015 DE 102015102648
(43) Veröffentlichungstag der Anmeldung: 03.01.2018
(73) Patentinhaber: ACO Severin Ahlmann GmbH & Co. KG, 24782 Büdelsdorf (DE)
(72) Erfinder: JÄGER, Matthias, 36100 Petersberg (DE); PALUCHOWSKI, Dariusz, 36039 Fulda (DE); BRAUN, Karsten, 36433 Bad Salzungen (DE); EULENSTEIN, Marco, 67731 Otterberg (DE)
(74) Vertreter: Kilchert, Jochen
(86) Internationale Anmeldenummer: PCT/EP2016/053408
(87) Internationale Veröffentlichungsnummer: WO 2016/135028

(56) Entgegenhaltungen:
- EP-A1- 0 174 554
- EP-A1- 2 465 822
- WO-A1-2004/079286
- DE-A1-102008 001 518
- DE-C1- 3 614 024
- DE-U1-202012 004 941

## Beschreibung

Die Erfindung betrifft ein Verfahren zur Reinigung einer zur Wärmeübertragung vorgesehenen Trennwand in einer Wärmerückgewinnungseinheit für Abwasser, sowie eine Vorrichtung zur Rückgewinnung von Restwärme aus Abwasser gemäß dem Oberbegriff des Patentanspruchs 1 bzw. des Patentanspruchs 3.
In Küchen wird eine große Menge an Abwärme in Form von heißem Abwasser produziert, beispielsweise durch Reinigung von verschmutztem Geschirr. Wird dieses Abwasser direkt in den Abwasserkanal geleitet, geht eine große Menge an nutzbarer Energie verloren. Es ist daher erstrebenswert, diese Energie mittels Wärmerückgewinnung aus dem Abwasser nutzbar zu machen.
Zur Wärmerückgewinnung aus dem Abwasser werden Wärmetauscher verwendet. Diese umfassen einen Abwasserraum, in dem sich Abwasser befindet, dessen Wärme rückgewonnen werden soll, sowie einen Nutzwasserraum, in dem sich Nutzwasser befindet, das die Wärme des Abwassers aufnimmt. Beide Räume sind durch eine zur Wärmeübertragung vorgesehenen Trennwand getrennt. Die DE 10 2006 050 922 A1 zeigt beispielsweise eine solche Wärmerückgewinnungseinheit, in der der Abwasserraum durch einen Behälter gebildet wird und die im Abwasser vorhandene Wärme auf eine Flüssigkeit übertragen wird, die durch einen im Behälter befindlichen Wärmetauscher fließt, dessen Wände die Trennwand zwischen Abwasserraum und Nutzwasserraum darstellen.
Da Abwasser stets Verunreinigungen aufweist, besteht in derartigen Wärmerückgewinnungseinheiten das Problem, dass sich Verunreinigungen an den die Wärme übertragenden Trennwänden ansammeln und die Effizienz der Wärmerückgewinnung beeinträchtigen. Daher besteht die Notwendigkeit, diese Trennwände zu reinigen. In der zitierten DE 10 2006 050 922 A1 beispielsweise erfolgt die Reinigung der Trennwand durch die konvektive Strömung des Abwassers durch den Behälter, was bei stark verschmutztem Abwasser nicht ausreichend ist.
Die DE 3400759 A1 schlägt eine Wärmerückgewinnungseinheit zur Rückgewinnung der Wärme aus Abwasser vor, in der das Abwasser von einem Behälter aufgenommen wird, in dem sich eine per Handkurbel betätigbare Reinigungsvorrichtung zur Reinigung des Behälterbodens befindet. Weitere, automatisch betätigte oder permanent aktive mechanische Reinigungsvorrichtungen zur mechanischen Reinigung finden sich in der DE 10 2007 006 787 A1, der DE 3907852 A1, oder der DE 20 2007 006 465 U1.

WO-A-2004079286 offenbart ein Verfahren zur Reinigung einer zur Wärmeübertragung vorgesehenen Trennwand bzw. eine Wärmerückgewinnungseinheit für Rückgewinnung von restwärme aus Abwasser gemäß dem Oberbegriff des Anspruchs 1 bzw des Anspruchs 2. Das Abwasser, das in Küchen produziert wird, weist häufig eine derart hohe Schmutzbeladung auf und ist dabei derart stark fett- und ölbelastet, dass die bekannten mechanischen Reinigungsvorrichtungen nicht ausreichend sind, dauerhaft eine ausreichende Reinigung des Wärmetauschers und eine damit verbundene erwünschte hohe Effizienz desselben zu gewährleisten.
Der Erfindung liegt daher die Aufgabe zugrunde, ein Verfahren zur Reinigung einer zur Wärmeübertragung vorgesehenen Trennwand in einer Wärmerückgewinnungseinheit, sowie eine Wärmerückgewinnungseinheit bereitzustellen, die in der Lage ist, Verschmutzungen der zwischen Abwasserraum und Nutzwasserraum angeordneten Trennwand dauerhaft zu unterdrücken und so die Effizienz der Wärmerückgewinnungseinheit zu erhöhen.
Diese Aufgabe wird durch ein Verfahren nach Patentanspruch 1, bzw. durch eine Vorrichtung nach Patentanspruch 2 gelöst.
Insbesondere wird die Aufgabe durch ein Verfahren zur Reinigung einer zur Wärmeübertragung vorgesehenen Trennwand gelöst, die in einem Wärmetauscher einen Abwasserraum, durch den Abwasser vor Ableitung in einen Abwasserkanal geleitet wird, von einem Nutzwasserraum, durch den zu erwärmendes Wasser fließt, trennt, wobei eine kontinuierliche Reinigung der Trennwand durch einen Abstreifer in vorbestimmten Zeitabständen unterbrochen und eine alternative Reinigung durch einen Hochdruckreiniger durchgeführt wird, wobei der Abwasserraum vor Reinigung der Trennwand durch den Hochdruckreiniger entleert wird, und wobei Fett aus dem Abwasser vor dessen Zuführung zum Wärmetauscher abgeschieden wird.

Ein wesentlicher Punkt der Erfindung liegt darin, dass die Reinigung durch Verwendung zweier verschiedener Selbstreinigungseinheiten geschieht. Die kontinuierliche, mechanische Reinigung allein kann nicht dauerhaft verhindern, dass sich Verschmutzungen an der wärmeübertragenden Trennwand anlagern. Diese werden dann durch zeitweise Verwendung des Hochdruckreinigers beseitigt. Durch dieses zweiteilige Reinigungsverfahren wird sichergestellt, dass sich selbst bei Betrieb mit stark verschmutztem Wasser keine harten Verkrustungen an der Trennwand anlagern, wodurch die Effizienz der Wärmerückgewinnungseinheit erhöht wird.
Bei einer bevorzugten Ausführungsform des erfindungsgemäßen Verfahrens erfolgt vor Eintritt des Abwassers in die Wärmerückgewinnungseinheit eine Vorreinigung mittels eines Fettabscheiders, der in Strömungsrichtung des Abwassers vor der Wärmerückgewinnungseinheit bereitgestellt ist. Dadurch kann die Schmutzbelastung der Wärmeübertragungseinheit verringert werden.
Die erfindungsgemäße Wärmerückgewinnungseinheit umfasst einen Wärmetauscher mit einem Abwasserraum, durch den Abwasser vor Ableitung in einen Abwasserkanal geleitet wird, und einem Nutzwasserraum, durch den zu erwärmendes Wasser fließt, die durch eine Trennwand zur Wärmeübertragung getrennt sind, wobei der Wärmetauscher mindestens eine Selbstreinigungseinheit zur Reinigung der Trennwand auf Seite des Abwasserraums aufweist, dadurch gekennzeichnet, dass die Selbstreinigungseinheit einen Abstreifer zum kontinuierlichen Abstreifen von Belägen von der Trennwand während eines Wärmetauscherbetriebs, und einen Hochdruckreiniger zum alternativen Reinigen der Trennwand bei unterbrochenen Betrieb des Abstreifers umfasst,
wobei eine Entleerungsvorrichtung vorgesehen und derart ausgebildet ist, dass der Abwasserraum mindestens vor Reinigung der Trennwand durch den Hochdruckreiniger entleerbar ist, und wobei ein Fettabscheider in Strömungsrichtung des Abwassers vor dem Wärmetauscher angeordnet ist.

Die Wärmerückgewinnungseinheit umfasst einen Fettabscheider, der in Strömungsrichtung des Abwassers vor dem Wärmetauscher angeordnet ist und fett- und ölhaltige Verunreinigungen zumindest teilweise aus dem Abwasser entfernt, was die Verschmutzung des Abwasserraums des Wärmetauschers verringert.
Vorzugsweise umfasst die Entleerungsvorrichtung zum Entleeren des Abwasserraums eine Leitung zum Ableiten, vorzugsweise zum Abpumpen des Abwassers aus dem Abwasserraum in den Abwasserkanal. Dadurch kann die Entleerung des Abwasserraums möglichst schnell und gründlich erfolgen.

Der Hochdruckreiniger umfasst vorzugsweise eine Wasservorlage zur Trennung der Systeme, eine Hochdruckpumpe zum Erzeugen des Hochdruckwassers und einen Kopf zur Ausgabe des Hochdruckwassers. Diese Bauweise des Hochdruckreinigers stellt sicher, dass der Hochdruckreiniger effizient und zuverlässig arbeitet.

Es ist weiterhin bevorzugt, dass ein Pufferspeicher für das Nutzwasser und eine Zirkulationspumpe zum Pumpen des Nutzwassers durch den Wärmetauscher vorgesehen sind. Das im Wärmetauscher zu erwärmende Nutzwasser kann mit der Zirkulationspumpe durch den Wärmetauscher gepumpt werden und im Pufferspeicher gespeichert werden, was das Betriebsverhalten und den Wirkungsgrad der Wärmerückgewinnungseinheit verbessert. Vorzugsweise ist der Pufferspeicher mit einer Wasserleitung für die Zuführung von zu erwärmendem Wasser verbunden und einer Ausgangsleitung, die das erwärmte Wasser einem Benutzer zur Verfügung stellt.

In einer bevorzugten Ausführungsform umschließt der Nutzwasserraum den Abwasserraum. Dies stellt sicher, dass bei vergleichsweise einfacher Konstruktion des Wärmetauschers eine möglichst große Oberfläche des Abwasserraums als Trennwand und damit als wärmeübertragendes Element fungiert. Dies erhöht die Wärmeübertragung des Wärmetauschers und vereinfacht die Herstellung desselben.

Es ist weiterhin bevorzugt, dass die Trennwand eine rotationssymmetrische Mantelfläche aufweist. Dies ermöglicht eine konzeptionell einfache Konstruktion des mechanischen Abstreifers und vereinfacht weiter die Herstellung des Wärmetauschers.

Der Abstreifer ist vorzugsweise um eine Achse derart rotierbar ausgebildet, dass Beläge von der Trennwand durch den Abstreifer abstreifbar sind. Dies gewährleistet bei kontinuierlichem Betrieb des Abstreifers eine gleichmäßige und effektive Reinigung der gesamten Trennwand.

In einer möglichen Ausführungsform ist der Nutzwasserraum als Wärmetauscher-Wendel ausgeführt. Diese gewährleistet gerade bei hoher Pumpleistung der Zirkulationspumpe eine hohe Wärmeübertragung

Weitere Ausführungsformen der Erfindung ergeben sich aus den Unteransprüchen.

Nachfolgend wird ein Ausführungsbeispiel der Erfindung anhand einer schematischen Darstellung näher erläutert.

Die Abbildung zeigt schematisch den Aufbau einer erfindungsgemäßen Wärmerückgewinnungseinheit. Die Wärmerückgewinnung erfolgt in einem Wärmetauscher 21. Das zu entsorgende warme Abwasser wird über eine Leitung 1 in einen Abwasserraum 2 des Wärmetauschers 21 geleitet, der durch eine Trennwand 17, die als Wärmeübertragungselement fungiert, von einem Nutzwasserraum 6 getrennt ist, durch den im Wärmerückgewinnungsbetrieb zu erwärmendes Wasser fließt.

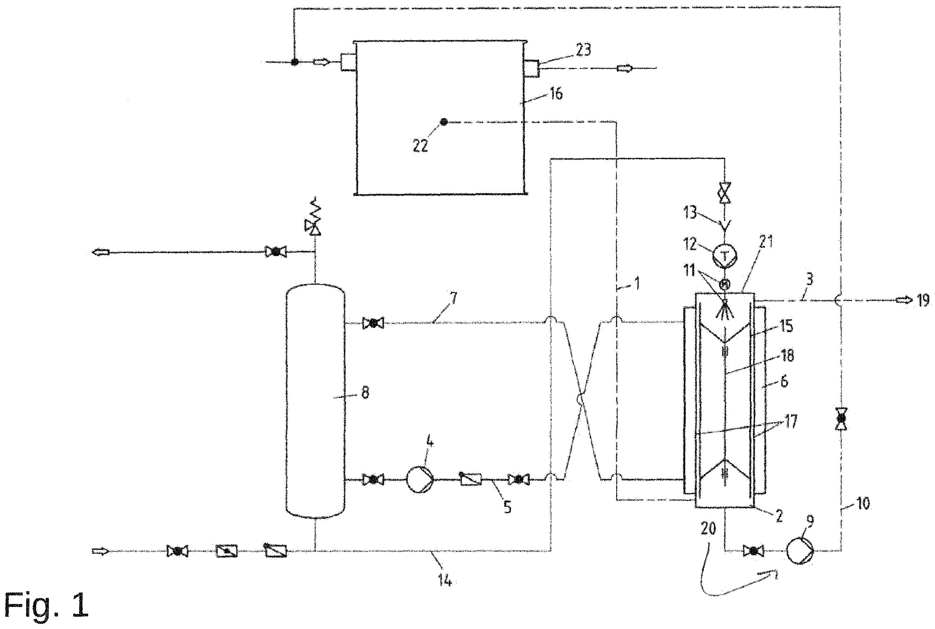

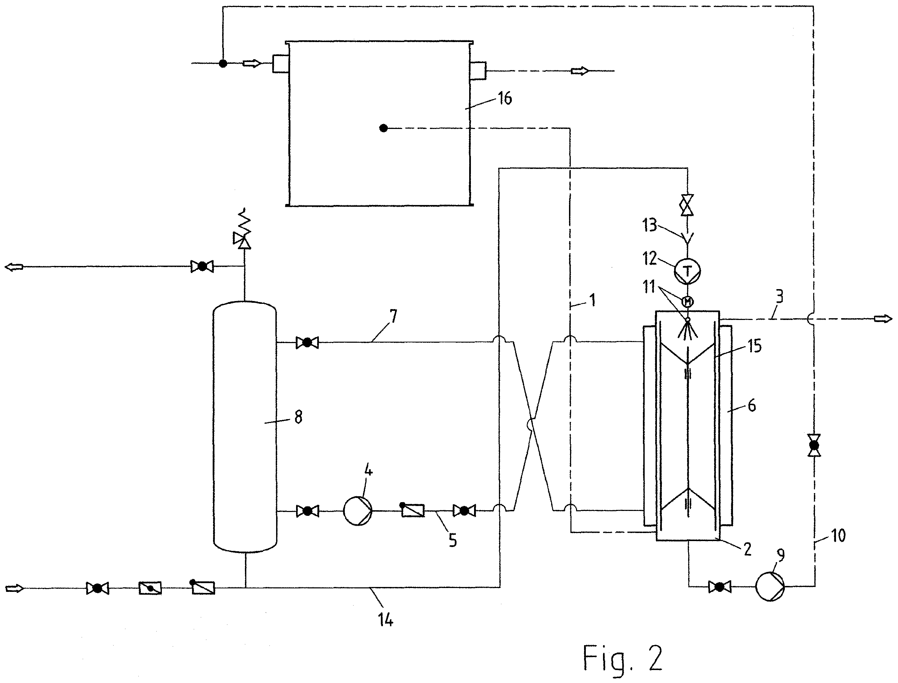

Im Strömungsweg des Abwassers befindet sich ein Fettabscheider 16, der über die Leitung 1 mit dem Abwasserraum 2 verbunden ist und vor Eintreten in den Wärmetauscher 21 vom Abwasser durchflossen, oder teilweise durchflossen wird. Die Leitung 1 ist dazu, wie in Fig. 1 gezeigt, mit einer Fettabscheiderableitung 22 verbunden, die näher an der Einlauföffnung des Fettabscheiders 16 liegt, so dass der Fettabscheider 16 nur teilweise durchflossen wird. In diesem Bereich ist die Abwassertemperatur noch höher und das in diesem Bereich entnommene Abwasser kann dann mit erhöhter Temperatur dem Abscheider entnommen werden und somit vorteilhafterweise die Effizienz des Wärmetauschers 21 steigern. Im Fettabscheider 16 werden Fette und Öle aus dem Abwasser abgeschieden. Soll der Wärmetauscher 21 mit Abwasser betrieben werden, das einen geringeren Fett- und Ölgehalt aufweist, kann die Leitung 1 auch an den Fettabscheiderausgang 23 angeschlossen werden, der weiter entfernt von der Einlauföffnung des Fettabscheiders 16 angeordnet ist. In diesem Falle hat das in den Wärmetauscher 21 geleitete Abwasser zwar eine geringere Temperatur, weist dafür aber auch eine geringere Verschmutzung auf, was die Schmutzlast des Wärmetauschers 21 verringert.

Der Abwasserraum 2 verfügt über eine Entleerungsvorrichtung 20. Der Abwasserraum 2 ist über eine Leitung 10 mit einem Abwasserkanal 19 verbunden und kann über diese entleert werden. Hierfür ist eine Pumpe 9 vorgesehen, um den Abwasserraum 2 effizienter und schnell zu entleeren.

Der Wärmetauscher 21 umfasst einen Hochdruckreiniger 11, 12, 13, der über eine Leitung 14 an eine Wasserzuleitung angeschlossen ist. In der gezeigten Ausführungsform umfasst der Hochdruckreiniger 11, 12, 13 eine Wasservorlage 13 zur Trennung der Systeme, eine Hochdruckpumpe 12, die das Hochdruckwasser erzeugt, sowie einen Kopf 11, über den das Hochdruckwasser in den Abwasserraum 2 des Wärmetauschers 21 ausgegeben wird.

Das zu erwärmende Nutzwasser wird in einem Pufferspeicher 8 zwischengespeichert, der über eine Zuleitung 5 und eine Ableitung 7 des Nutzwasserraums 6 mit selbigem verbunden ist. Eine Zirkulationspumpe 4 pumpt das Nutzwasser vom Pufferspeicher 8 über die Zuleitung 5 in den Nutzwasserraum 6, wo es erwärmt wird und über die Ableitung 7 zurück in den Pufferspeicher 8. Der Pufferspeicher 8 dient zur Speicherung des erwärmten Nutzwassers und erhöht die Effizienz der Wärmerückgewinnungseinheit. Das Nutzwasser kann im Pufferspeicher 8 gehalten werden, bis es von einem Benutzer benötigt wird. Der Pufferspeicher 8 ist mit einer Ausgangsleitung verbunden, über die ein Benutzer erwärmtes Nutzwasser entnehmen kann, sowie mit einer Zuführungsleitung, um frisches Nutzwasser zur Erwärmung aufzunehmen.

In der gezeigten Ausführungsform umschließt der Nutzwasserraum 6 den Abwasserraum 2. Die Trennwand 17 ist rotationssymmetrisch ausgebildet. Die Trennwand 17 ist im Wesentlichen die Mantelfläche eines Zylinders, der vom Abwasserraum 2 gebildet ist. Vorstellbar ist aber auch, dass der Abwasserraum 2 kegelstumpfförmig ist oder eine andere rotationssymmetrische Form aufweist.

Entsprechend der rotationssymmetrischen Form der Trennwand 17 ist ein Abstreifer 15 rotierbar um eine Achse 18 ausgebildet, die auf der Rotationssymmetrieachse des Abwasserraums 2 liegt. Rotiert der Abstreifer 15 um die Achse 18, werden Beläge kontinuierlich von der Trennwand 17 abgestreift.

Im Betrieb der Wärmerückgewinnungseinheit rotiert der Abstreifer 15 um seine Achse 18 und reinigt die Trennwand 17 kontinuierlich, indem er Beläge von ihr abstreift. Diese Reinigung wird in variablen Zeitabständen unterbrochen. Es wird zunächst der Abwasserraum 2 mit Hilfe der Pumpe 9 über die Leitung 10 entleert. Im Anschluss wird eine Reinigung der Trennwand 17 mit dem Hochdruckreiniger 11, 12, 13 durchgeführt, der mit Hochdruckfluid hartnäckige Verunreinigungen von der Trennwand 17 abspritzt. Vorteilhafterweise wird das vom Hochdruckreiniger 11, 12, 13 ausgestoßene Wasser mittels der Pumpe 9 über die Leitung 10 in den Abwasserkanal 19 geleitet. Nach der temporären Reinigung der Trennwand 17 durch den Hochdruckreiniger 11, 12, 13 wird wieder warmes Abwasser in den Abwasserraum 2 geleitet, der Wärmerückgewinnungsbetrieb wiederaufgenommen und der Abstreifer 15 zur Reinigung der Trennwand 17 aktiviert.

Die zeitlichen Abstände, in denen die temporäre Reinigung durch den Hochdruckreiniger 11, 12, 13 erfolgt, können als feste Zeitintervalle festgelegt werden. Vorstellbar ist auch, dass ein Benutzer durch eine Steuervorrichtung nicht gezeigt den temporären Reinigungsvorgang manuell auslösen kann. Vorstellbar ist weiterhin, die temporäre Reinigung durch eine Messung des Schmutzfilms auf der Trennwand 17 zu steuern.

In der obigen Beschreibung wurde angenommen, dass das Abwasser in einer Küche produziert wird. Das Abwasser kann jedoch auch anderes häusliches, kommunales, gewerbliches oder industrielles Abwasser sein.

### Bezugszeichenliste

- 1:: Leitung
- 2:: Abwasserraum
- 3:: Leitung
- 4:: Zirkulationspumpe
- 5:: Zuleitung
- 6:: Nutzwasserraum
- 7:: Ableitung
- 8:: Pufferspeicher
- 9:: Pumpe
- 10:: Leitung
- 11:: Hochdruckreiniger
- 12:: Hochdruckpumpe
- 13:: Wasservorlage
- 14:: Leitung
- 15:: Abstreifer
- 16:: Fettabscheider
- 17:: Trennwand
- 18:: Achse
- 19:: Abwasserkanal
- 20:: Entleerungsvorrichtung
- 21:: Wärmetauscher
- 22:: Fettabscheiderableitung
- 23:: Fettabscheiderausgang

## Patentansprüche

1. Verfahren zur Reinigung einer zur Wärmeübertragung vorgesehenen Trennwand, die in einem Wärmetauscher einen Abwasserraum, durch den Abwasser vor Ableitung in einen Abwasserkanal geleitet wird, von einem Nutzwasserraum, durch den zu erwärmendes Wasser fließt, trennt,
**gekennzeichnet dadurch,**
**dass** eine kontinuierliche Reinigung der Trennwand durch einen Abstreifer in vorbestimmten Zeitabständen unterbrochen und eine alternative Reinigung durch einen Hochdruckreiniger durchgeführt wird, wobei der Abwasserraum vor Reinigung der Trennwand durch den Hochdruckreiniger entleert wird, und wobei Fett aus dem Abwasser vor dessen Zuführung zum Wärmetauscher abgeschieden wird.

2. Wärmerückgewinnungseinheit für Rückgewinnung von Restwärme aus Abwasser, insbesondere zur Durchführung eines Verfahrens nach Anspruch 1, umfassend einen Wärmetauscher (21) mit einem Abwasserraum (2), durch den Abwasser vor Ableitung in einen Abwasserkanal (19) geleitet wird, und einen Nutzwasserraum (6), durch den zu erwärmendes Wasser fließt, die durch eine Trennwand (17) zur Wärmeübertragung getrennt sind, wobei der Wärmetauscher (21) mindestens eine Selbstreinigungseinheit zur Reinigung der Trennwand (17) auf Seite des Abwasserraums (2) aufweist, **dadurch gekennzeichnet, dass**
die Selbstreinigungseinheit einen Abstreifer (15) zum kontinuierlichen Abstreifen von Belägen von der Trennwand (17) während eines Wärmetauscherbetriebs, und
einen Hochdruckreiniger (11, 12, 13) zum alternativen Reinigen der Trennwand bei unterbrochenen Betrieb des Abstreifers (17) umfasst, wobei eine Entleerungsvorrichtung (20) vorgesehen und derart ausgebildet ist, dass der Abwasserraum (2) mindestens vor Reinigung der Trennwand (17) durch den Hochdruckreiniger (11, 12, 13) entleerbar ist, und wobei ein Fettabscheider (16) in Strömungsrichtung des Abwassers vor dem Wärmetauscher (21) angeordnet ist.

3. Wärmerückgewinnungseinheit nach Anspruch 2, **dadurch gekennzeichnet,**
**dass** die Entleerungsvorrichtung (20) eine Leitung (10) zum Ableiten, vorzugsweise zum Abpumpen des Abwassers aus dem Abwasserraum (2) in den Abwasserkanal (19) umfasst.

4. Wärmerückgewinnungseinheit nach Anspruch 2 oder 3, **dadurch gekennzeichnet,**
**dass** der Hochdruckreiniger (11, 12, 13) eine Wasservorlage (13) zur Bereitstellung ausreichender Wassermengen, eine Hochdruckpumpe (12) zum Erzeugen des Hochdruckwassers und einen Kopf (11) zur Ausgabe des Hochdruckwassers umfasst.

5. Wärmerückgewinnungseinheit nach einem der Ansprüche 2 bis 4, **dadurch gekennzeichnet,**
**dass** ein Pufferspeicher (8) für das Nutzwasser und eine Zirkulationspumpe (4) zum Pumpen des Nutzwassers durch den Wärmetauscher (21) vorgesehen sind.

6. Wärmerückgewinnungseinheit nach einem der Ansprüche 2 bis 5, **dadurch gekennzeichnet,**
**dass** der Nutzwasserraum (6) den Abwasserraum (2) umschließt.

7. Wärmerückgewinnungseinheit nach einem der Ansprüche 2 bis 6,
**dadurch gekennzeichnet,**
**dass** die Trennwand (17) eine rotationssymmetrische Mantelfläche aufweist.

8. Wärmerückgewinnungseinheit nach einem der Ansprüche 2 bis 7,
**dadurch gekennzeichnet,**
**dass** der Abstreifer (15) um eine Achse (18) derart rotierbar ausgebildet ist, dass Beläge von der Trennwand (17) durch den Abstreifer (15) abstreifbar sind.

9. Wärmerückgewinnungseinheit nach einem der Ansprüche 2 bis 8, **dadurch gekennzeichnet,**
**dass** der Nutzwasserraum (6) als Wärmetauscher-Wendel ausgeführt ist.

## Claims

1. A method for cleaning a partition provided for transmitting heat, which separates, in a heat exchanger, a waste water chamber through which waste water is conducted prior to being discharged into a waste water channel from a usable water chamber through which water to be heated flows, **characterized in that**
a continuous cleaning of the partition is performed interruptedly by a scraper in predetermined intervals of time, or an alternative cleaning is performed by a high-pressure cleaner, wherein the waste water chamber is emptied prior to the partition being cleaned by the high-pressure cleaner, and wherein fatty matter is eliminated from the waste water prior to supplying it to the heat exchanger.

2. A heat recovery unit for recovering residual heat from waste water, in particular for performing a method according to claim 1, comprising a heat exchanger (21) having a waste water chamber (2) through which waste water is conducted prior to being discharged into a waste water channel (19), and a usable water chamber (6) through which water to be heated flows, which are separated by a partition (17) for transmitting heat, wherein the heat exchanger (21) has at least one self-cleaning unit for cleaning the partition (17) on the side of the waste water chamber (2), **characterized in that**
the self-cleaning unit comprises a scraper (15) for continuously scraping off deposits from the partition (17) during operation of the heat exchanger, and a high-pressure cleaner (11, 12, 13) for alternatively cleaning the partition (17) when the operation of the scraper is interrupted, wherein an emptying device (20) is provided and configured such that the waste water chamber (2) is dischargeable at least prior to the partition (17) being cleaned by the high-pressure cleaner (11, 12, 13), and wherein a fat trap (16) is provided upstream of the heat exchanger (21) in the flow direction of the waste water.

3. The heat recovery unit according to claim 2, **characterized in that** the emptying device (20) comprises a line (10) for draining off, preferably pumping off the waste water from the waste water chamber (2) into the waste water channel (19).

4. The heat recovery unit according to claim 2 or 3, **characterized in that**
the high-pressure cleaner (11, 12, 13) comprises a hydraulic seal (13) for providing sufficient amounts of water, a high-pressure pump (12) for generating high-pressure water, and a button (11) for outputting the high-pressure water.

5. The heat recovery unit according to anyone of claims 2 to 4, **characterized in that**
a buffer store (8) for the usable water and a circulation pump (4) for pumping the usable water through the heat exchanger (21) are provided.

6. The heat recovery unit according to anyone of claims 2 to 5, **characterized in that**
the usable water chamber (6) encloses the waste water chamber (2).

7. The heat recovery unit according to anyone of claims 2 to 6, **characterized in that**
the partition (17) features a rotationally symmetrical surface shell.

8. The heat recovery unit according to anyone of claims 2 to 7, **characterized in that**
the scraper (15) is formed to be rotatable about an axle (18) in such a manner that deposits can be scraped off from the partition (17) by the scraper (15).

9. The heat recovery unit according to anyone of claims 2 to 8, **characterized in that** the usable water water chamber (6) is realized as a heat exchanger spiral.

## Revendications

1. Procédé de nettoyage d'une cloison destinée à un transfert de chaleur qui, dans un échangeur de chaleur, sépare une chambre d'eaux usées à travers laquelle des eaux usées sont acheminées avant d'être évacuées dans une canalisation d'eaux usées d'une chambre d'eau sanitaire à travers laquelle de l'eau à chauffer circule,
**caractérisé en ce que**
un nettoyage continu de la cloison par un racleur est interrompu à intervalles prédéterminés et un nettoyage en variante par un nettoyeur haute pression est effectué, sachant que la chambre d'eaux usées est vidangée avant le nettoyage de la cloison par le nettoyeur haute pression, et sachant que de la graisse provenant des eaux usées est séparée avant l'acheminement de celles-ci vers l'échangeur de chaleur.

2. Unité de récupération de chaleur pour la récupération de chaleur résiduelle à partir d'eaux usées, en particulier pour l'exécution d'un procédé selon la revendication 1, comprenant un échangeur de chaleur (21) avec une chambre d'eaux usées (2) à travers laquelle des eaux usées sont acheminées avant d'être évacuées dans une canalisation d'eaux usées (19) et une chambre d'eau sanitaire (6) à travers laquelle de l'eau à chauffer circule, lesquelles sont séparées par une cloison (17) destinée à un transfert de chaleur, sachant que
l'échangeur de chaleur (21) présente au moins une unité d'autonettoyage pour le nettoyage de la cloison (17) du côté de la chambre d'eaux usées (2), **caractérisée en ce que**
l'unité d'autonettoyage comprend un racleur (15) pour le raclage continu de dépôts de la cloison (17) pendant un fonctionnement d'échangeur de chaleur, et un nettoyeur haute pression (11, 12, 13) pour le nettoyage en variante de la cloison en cas de fonctionnement interrompu du racleur, sachant qu'un dispositif de vidange (20) est prévu et constitué de telle façon que la chambre d'eaux usées (2) puisse être vidangée au moins avant le nettoyage de la cloison (17) par le nettoyeur haute pression (11, 12, 13), et sachant qu'un séparateur de graisse (16) est disposé avant l'échangeur de chaleur (21) en direction d'écoulement des eaux usées.

3. Unité de récupération de chaleur selon la revendication 2, **caractérisée en ce que** le dispositif de vidange (20) comprend une conduite (10) destinée à acheminer, de préférence à pomper, les eaux usées depuis la chambre d'eaux usées (2) vers la canalisation d'eaux usées (19).

4. Unité de récupération de chaleur selon la revendication 2 ou 3, **caractérisée en ce que**
le nettoyeur haute pression (11, 12, 13) comprend une réserve d'eau (13) pour mettre à disposition des quantités d'eau suffisantes, une pompe haute pression (12) pour générer de l'eau haute pression et un pommeau (11) pour délivrer l'eau haute pression.

5. Unité de récupération de chaleur selon l'une des revendications 2 à 4, **caractérisée en ce que**
un accumulateur (8) pour l'eau sanitaire et une pompe de circulation (4) pour le pompage de l'eau sanitaire à travers l'échangeur de chaleur (21) sont prévus.

6. Unité de récupération de chaleur selon l'une des revendications 2 à 5, **caractérisée en ce que**
la chambre d'eau sanitaire (6) entoure la chambre d'eaux usées (2).

7. Unité de récupération de chaleur selon l'une des revendications 2 à 6, **caractérisée en ce que**
la cloison (17) présente une surface d'enveloppe symétrique en rotation.

8. Unité de récupération de chaleur selon l'une des revendications 2 à 7, **caractérisée en ce que**
le racleur (15) est configuré de façon rotative autour d'un axe (18) de telle sorte que des dépôts puissent être raclés de la cloison (17) par le racleur (15).

9. Unité de récupération de chaleur selon l'une des revendications 2 à 8, **caractérisée en ce que**
la chambre d'eau sanitaire (6) est réalisée comme spirale d'échangeur de chaleur.
